(19) Europäisches Patentamt
European Patent Office
Office européen des brevets

(11) Numéro de publication: **0 092 446**
**B1**

(12) # FASCICULE DE BREVET EUROPÉEN

(45) Date de publication du fascicule du brevet: **16.12.87**

(51) Int. Cl.⁴: **C 08 L 51/06**, C 08 L 23/08, C 08 K 5/09, C 08 G 81/02

(21) Numéro de dépôt: **83400312.1**

(22) Date de dépôt: **14.02.83**

(54) **Compositions réticulables par la chaleur à base de polymères oléfiniques, obtention et application à la production d'objets conformés réticulés.**

(30) Priorité: **03.03.82 FR 8203478**

(43) Date de publication de la demande: **26.10.83 Bulletin 83/43**

(45) Mention de la délivrance du brevet: **16.12.87 Bulletin 87/51**

(84) Etats contractants désignés: **CH DE FR GB IT LI NL SE**

(56) Documents cité:
**DE-A-2 145 142**
**FR-A-2 039 965**
**GB-A-1 079 749**
**US-A-2 403 465**
**US-A-3 642 726**

**Le dossier contient des informations techniques présentées postérieurement au dépôt de la demande et ne figurant pas dans le présent fascicule.**

(73) Titulaire: **ATOCHEM, 12- 16 allée des Vosges, F-92400 Courbevoie (FR)**

(72) Inventeur: **Cuzin, Daniel, Carentonne, F-27300 Bernay (FR)**
Inventeur: **Leriche, Christian, Domaine de Maubuisson, F-27470 Serquigny (FR)**
Inventeur: **Lefloch, Hervé, 27, Les Logis Avenue du Président Kennedy, F-27300 Bernay (FR)**

(74) Mandataire: **Phélip, Bruno, c/o Cabinet Harlé & Phélip 21, rue de la Rochefoucauld, F-75009 Paris (FR)**

EP 0 092 446 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1987

## Description

L'invention concerne le domaine des compositions polymères susceptibles d'être transformées, sous l'effet de la chaleur, en objets finis réticulés. L'invention a plus particulièrement pour objet des compositions réticulables par la chaleur à base de polymères oléfiniques. Elle concerne également un procédé pour l'obtention de telles compositions. Elle a aussi pour objet un procédé ds transformation desdites compositions en objets finis réticulés.

Les problèmes pratiques posés par la transformation des compositions polymères réticulables par la chaleur sont bien connus de l'homme du métier. Le brevet britannique 1 079 749 peut être cité à titre d'exemple pour illustrer l'arrière-plan technologique dans ce domaine. Il illustre bien que la réticulation doit être limitée lors de la formation de la composition polymère. Si la réticulation a lieu prématurément de façon excessive, on obtient une composition qui se comporte comme un produit thermodurcissable qu'il est alors impossible de travailler par les techniques habituelles de transformation telles que l'extrusion ou l'injection. Par ailleurs, s'il y a une absence totale de réticulation dans la composition polymère de départ, la transformation devient aisée étant donné que le produit est encore thermoplastique, mais l'objet fini obtenu n'est pas réticulé de sorte qu'il faut encore le soumettre à un post-traitement capable de provoquer la réticulation et cette opération est généralement lente et coûteuse.

On a déjà préconisé de faire réagir des polymères ou des copolymères porteurs de groupes réactifs anhydrides ou hydroxyles avec respectivement des groupes hydroxyles ou anhydrides, dans le but d'obtenir des systèmes thermoréversibles possédant, à hautes températures, les caractéristiques de fluidité d'un thermoplastique, et à basses températures, les caractéristiques d'un thermodurcissable (voir par exemple: BE 780966 et US 3678016 et US 3642726). Dans ce dernier on décrit des compositions résultant de la réaction de copolymères porteurs de fonctions anhydrides avec des polyols, réaction qui se produit par chauffage du mélange des réactifs. Les compositions finalement obtenues sont réticulées et insolubles dans l'acétone mais cependant susceptibles de ramollir au-delà de 80°C, ce qui permet d'en faire des moulages. On connaît également le r*ole joué par des composés polyanhydrides dans le cadre de la réticulation des résines époxydiques.

Par ailleurs, on sait (US 3300452) que les copolymères à base d'acrylates d'hydroxyalkyles sont auto-réticulables à des températures supérieures à 170°C.

L'invention concerne des compositions réticulables qui peuvent être conformées en objets par les techniques habituelles propres aux thermoplastiques, la réticulation définitive de ces objets pouvant être réalisée par traitement à la chaleur à une température inférieure à leur point de fusion.

Selon l'invention, une telle composition thermoplastique, pouvant être réticulée par la chaleur, conduisant à un système non-thermoréversible, consiste en un mélange de;

(1) au moins un polymère oléfinique porteur de fonctions hydroxyles, qui contienne pour 100 g de polymère de 0,02 groupe OH à 1 groupe OH et dont l'indice de fusion selon la norme ASTM D1238 se situe entre 0,05 et 1000g/10 min à 190°C pour une charge de 2,16 kg

(2) au moins un composé polyanhydride qui soit partiellement ou totalement incompatible avec ledit polymère, lorsque ce dernier est à l'état fondu

(3) du produit résultant de la réaction partielle de (1), avec (2)

le rapport molaire entre anhydride et OH étant de 1 lorsque le polymère hydroxylé contient moins de 0,1 OH/100g tandis qu'il est inférieur à 1 lorsque le polymère comporte des quantités de groupes OH supérieures à 0,1 OH/100g, et ladite composition ayant un taux de gel, correspondant au taux d'insoluble dans le benzène, compris entre 2 et 50% et de préférence entre 20 et 40 %.

Les polymères porteurs de fonctions hydroxyles utilisés sont principalement des polymères oléfiniques et, plus particulièrement, ceux à base d'éthylène, les fonctions hydroxyles étant apportées, soit par copolymérisation avec un monomère insaturé hydroxylé, de préférence un monomère vinylique hydroxylé, soit par modification chimique d'un polymère existant (greffage, dégradation, hydrolyse....). La teneur en groupes OH de ces produits est fixée soit par le taux de comonomère, soit par le taux de greffage ou de dégradation, soit par le taux d'hydrolyse; il se situe entre 0,02 OH/100 g et 1 OH/100 g et préférentiellement entre 0,025 OH/100g et 0,1 OH/100g.

On peut utiliser tout type de polymères comportant des groupes OH dans les proportions indiquées ci-dessus et d'indice de fusion situé dans la gamme définie plus haut, par exemple tout type de:

- copolymères éthylène-vinyl acétate (EVA)
- copolymères éthylène-comonomère porteur de groupes OH
- EVA hydrolysés totalement ou partiellement
- polymères ou copolymères de l'éthylène greffés par un monomère porteur de groupes OH résiduels.

Les composés polyanhydrides utilisés sont des produits comportant dans ou sur leur chaîne des groupes anhydrides dans des proportions égales ou supérieures à 2 groupes par chaîne; préférentiellement, on utilisera des dianhydrides soit sous forme d'espèces monomériques, par exemple: le dianhydride de l'acide pyromellitique, le dianhydride de l'acide benzophénone tétracarboxylique; soit sous forme d'oligomères de longeur de chaînes variables par exemple: des polyesters ou des polyéthers terminés par des groupes anhydrides, tels le REA 2290 commercialisé par la Société CHLOE Chimie.

Pour pouvoir être utilisés dans l'invention, ces composés polyanhydrides devront être incompatibles avec le polymère polyol à l'état fondu utilisé; suivant la nature du polyanhydride choisi, l'incompatibilité sera partielle

ou totale.

On entend par incompatibilité, le fait que le composé polyanhydride se trouve, à l'état solide, dispersé dans la matrice polymérique à la température de transformation du système; on peut citer par exemple le cas du dihanydride de l'acide pyromellitique dont le point de fusion est de 280°C et qui est travaillé en mélange avec la phase polyol à des températures largement inférieures à son point de fusion, ou bien, le fait que le polymère polyol et le composé polyanhydride bien qu'à l'état fondu ne se mélangent pas pour donner une phase homogène. C'est le cas des composés polyesters dianhydrides utilisés dans le cadre de l'invention et dont le point de fusion se situe aux alentours de 80°C, mais qui, à la température de transformation du système, se trouvent à l'état fondu mais non dissous dans la phase polymérique polyol.

L'invention concerne également un procédé pour l'obtention de compositions réticulables par la chaleur, dans lequel on mélange un polymère et un agent réticulant dans des conditions ne provoquant pas une réticulation excessive, ledit procédé étant caratérisé en ce qu'on mélange à l'état fondu au moins un polymère oléfinique porteur de fonctions hydroxyles et au moins un composé polyanhydride qui est au moins partiellement incompatible avec ledit polymère à l'état fondu, la proportion de groupes anhydrides par rapport aux groupes hydroxyles étant au plus égale à 1 et les autres conditions réactionnelles étant telles qu'elles conduisent à une composition contenant essentiellement des fonctions monohémiesters et des fonctions di-hémiester et se trouvant ainsi à un état thermoplastique.

Selon une caractéristique essentielle de l'invention, l'incorporation à des polymères hydroxylés tels que ceux définis ci-dessus, de composés polyanhydrides, de préférence dianhydrides, non totalement compatibles, comme indiqué précédemment, conduit à des systèmes non thermoréversibles.

Les transformations irréversibles qui se déroulent dans les composés: polymères hydroxylés - polyanhydrides résultent des deux réactions successives illustrées par les schémas ci-après qui mettent en oeuvre, à titre d'exemple, un composé dianhydride:

1ère réaction (réaction à cinétique rapide de greffage):

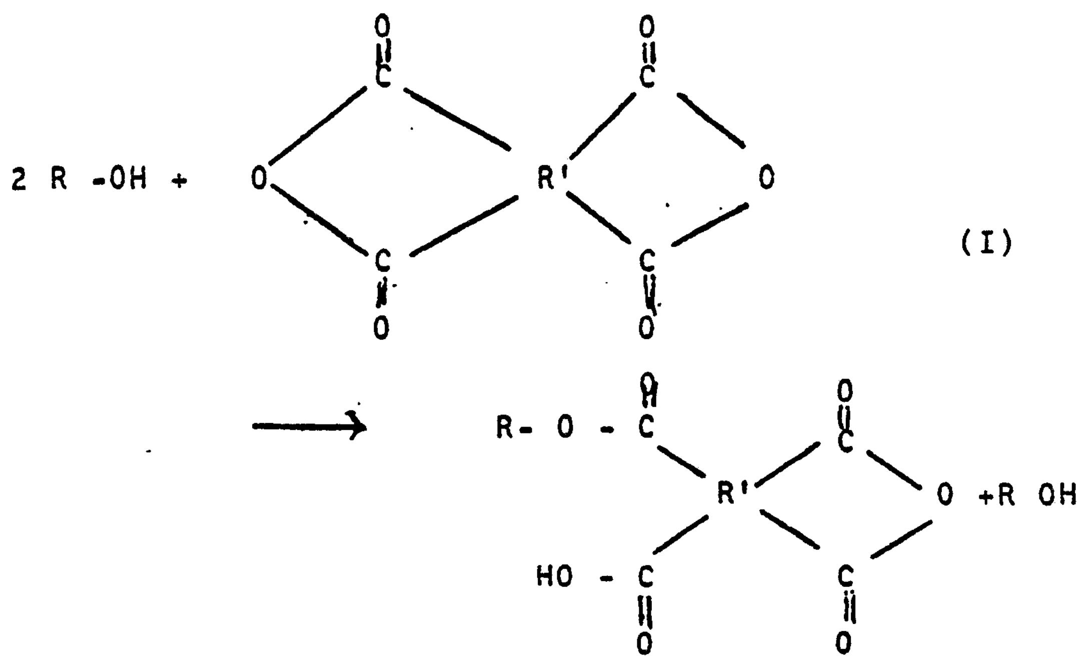

(I)

donnant lieu à la formation d'un mono hémi-ester (I). Dans le schéma réactionnel ci-dessus R représente le squelette polymère et R' la structure porteuse des groupes dianhydrides.

2ème réaction: lente-post-réticulation par formation d'un di-hémiester (II)

(I) 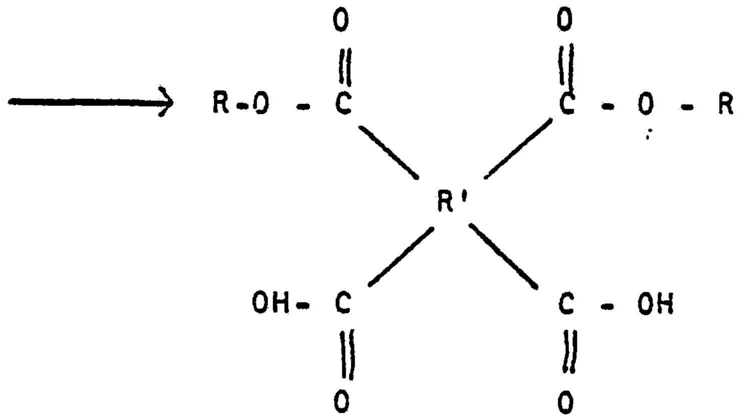 (II)

L'évolution irréversible des systèmes obtenus dépend fortement des facteurs suivants:

- taux d'hydroxyles présents dans le système- plus on élève la concentration en groupes hydroxyles, et plus le système évolue rapidement à stoechimétrie $\frac{anhydride}{OH}$ fixée, tous les autres facteurs étant fixes par ailleurs.
- stoechiométrie: $\frac{anhydride}{OH}$; plus on augmente la stoechiometrie entre 0 et I, à taux d'hydroxyle fixe et plus le système évolue rapidement, tous autres facteurs étant fixes par ailleurs,
- températures auxquelles sont menées les réactions; plus elles sont élevées et plus les réactions sont rapides,
- malaxage: les réactions sont d'autant plus rapides qu'il est plus intense
- durée.

Le procédé qui fait l'objet de la présente invention consiste dans une première étape, à incorporer les dianhydrides aux polymères hydroxylés fondus de la manière la plus intime possible dans des conditions telles que la première réaction puisse avoir lieu, la première réaction seulement, sans toutefois que l'on puisse éviter qu'une partie de la deuxième ait également lieu.

Dans certains cas, on pourra provoquer cette seconde réaction sans toutefois atteindre un niveau auquel le produit ne serait plus thermoplastique.

Ce résultat est atteint en jouant sur les facteurs énoncés plus haut: taux d'hydroxyle, stoechiométrie: $\frac{anhydride}{OH}$, température, malaxage.

La teneur en groupes OH devra se situer entre 0,02 OH/100 g et 1 OH/100 g et préférentiellement entre 0,025 et 0,1.

Pour des polymères comportant des quantités de groupes OH/100 g inférieures à 0,1, on travaillera en stoechiométrie $\frac{anhydride}{OH} = 1$ alors qu'avec des polymères comportant des quantités de groupes OH supérieures à 0,1 OH/100 g, on travaillera à des stoechiométries inférieures à 1.

Les températures seront toujours peu supérieures à la température de fusion de la phase polymérique Il convient de ne pas dépasser la température de 170°C pour les polymères et copolymères hydroxylés d'éthylène, qui sont préférés. On évitera les malaxages intenses et choisira donc les taux de cisaillement les plus faibles possibles; de toute façon, le temps de séjour dans l'appareil de transformation sera le plus court possible. Pratiquement, il ne dépassera pas deux minutes.

L'homme du métier dispose d'un moyen pratique commode pour apprécier le déroulement de la réaction qui, selon la caractéristique essentielle de l'invention, doit conduire à une composition contenant des fonctions mono-hémiesters avec un nombre plus réduit de fonctions di-hémiesters. Ce moyen consiste à mesurer le taux de gel de la composition obtenue. Un taux de gel élevé est le signe d'une réticulation élevée. Pratiquement, il est impossible d'empêcher que la réticulation ait lieu partiellement mais il convient, selon l'invention, de limiter la deuxième réaction (voir ci-dessus) pour obtenir une composition se trouvant encore à un état thermoplastique, lui permettant notamment d'être transformée par les techniques habituelles propres aux thermoplastiques. Dans certains cas, cependant, on peut volontairement accepter une réticulation plus forte à l'issue de la première étape, sans pour autant obtenir une composition de caractère thermodurcissable, de manière à raccourcir la dernière étape au cours de laquelle aura lieu la réticulation définitive dans l'objet fini.

En règle générale, les taux de gel admissibles dans les compositions réticulables selon l'invention se situent entre 2 % et 50 % et de préférence entre 20 et 40 %.

Selon une variante avantageuse de mise en oeuvre du procédé de l'invention, le polyanhydride est mis en contact avec le polymère hydroxylé, non pas en tant que tel mais au moyen d'un mélange-maître à base d'un polymère compatible avec le polymère hydroxylé. Cette présentation du polyanhydride permet une dispersion améliorée au sein du polymère hydroxylé, de sorte que l'efficacité de réticulation du polyanhydride se trouve accrue.

Les meilleurs polymères convenant à la fabrication de ce mélange-maître, sont les copolymères éthylène-acétate de vinyle et plus particulièrement ceux dont la teneur en acétate de vinyle est comprise entre 28 et 33 pour cent et dont l'indice de fluidité est voisin de 400 (en g/10 min. à 190° C).

L'invention ne doit pas être limitée aux mélanges-maître à base des seuls copolymères éthylène-acétate de vinyle car de bons résultats ont également été obtenus avec les terpolymères éthylène-acétate de vinyle-anhydride maléique.

Dans un mode de réalisation, donné à titre d'exemple de fabrication du mélange-maître, on réalise à sec un mélange de granulés d'EVA et de poudre du polyanhydride suffisamment divisé et introduit ce mélange dans tout appareil susceptible d'effectuer une bonne dispersion du polyanhydride dans l'EVA fondu.

On estime avoir réalisé une bonne dispersion lorsque, par observation au microscope, on constate que les grains originaux de polyanhydride ont éclaté en plusieurs autres grains naturellement plus petits, par exemple, de 50 à quelques µm.

Les malaxeurs continus double vis conviennent particulièrement bien pour ce travail.

C'est à ce stade que le choix de l'indice de fluidité de l'EVA a une grande importance. Si l'EVA est trop fluide, les effets de cisaillement sont réduits, ce qui ne facilite pas l'éclatement et la dispersion dans le mélange-maître. Par contre, s'il est trop visqueux, le polyanhydride aura du mal à circuler ultérieurement dans le polymère hydroxylé lors du traitement thermique. Un indice de fluidité de 800 conduit à de bons résultats mais à des difficultés d'ordre pratique (trop grande fluidité à la sortie du malaxeur) ce qui fait que l'on préfèrera un indice de 400 environ.

En ce qui concerne la fabrication d'un mèlange-maître à base d'anhydride pyromellitique (APM), de bons résultats ont été obtenus avec des mélanges de 25 parties d'APM et 75 parties d'EVA extrudés à la température de 100° C sur malaxeur continu à double vis WERNER et PFLEIDERER type ZSK 53.

Les granulés de mélange-maître obtenus peuvent par exemple être mélangés à sec avec des granulés ou de la poudre du polymère hydroxylé et le mélange introduit dans une extrudeuse qui assure le mélange par fusion à une température inférieure à 170° C.

Après transformation en objets finis, la température de post-traitement assurant la réticulation doit être au moins égale à 100° C lorsque l'on utilise de l'EVA pour fabriquer le mélange-maître, de manière que l'EVA dont le point de fusion est voisin de 100° C passe à l'état liquide et véhicule le dianhydride dans l'objet solide.

Isolément ou en combinaison avec la variante précitée selon laquelle le polyanhydride est mis en oeuvre sous forme d'un mélange-maître, on a trouvé qu'il pouvait être avantageux, dans certains cas, d'accélérer la réaction entre le polymère oléfinique hydroxylé et le polyanhydride, en vue notamment d'améliorer la vitesse et le taux de réticulation. Dans la pratique, on a obtenu de bons résultats avec des composés à base de silicone contenant des groupements siloxanes qui, en plus d'un effet accélérateur, jouent un r*ole de plastifiant. On peut également utiliser comme accélérateurs des catalyseurs d'estérification tels que les sels organiques d'étain et, par exemple, le dilaurate de dibutyl-étain. Ces catalyseurs peuvent être utilisés seuls ou en mélange entre eux.

On notera que l'on peut, pendant cette première étape, introduire en même temps que les dianhydrides, des anti-oxydants, agents de lubrification, colorants charges et autres additifs habituels aux polyoléfines.

Dans une deuxième étape, on transforme les compositions obtenues dans la première étape en objets finis dans des conditions permettant également de limiter la deuxième réaction.

Par objets finis, on entend tous les objets résultant de la mise en forme des compositions par les techniques habituelles de transformation des thermoplastiques, moulages par injection ou compression, extrusion... tels que: pièces moulées, films, gaines, jets, tubes, revêtements de câbles, mousses et autres produits similaires. Les mêmes précautions que ci-dessus seront prises: températures ne dépassant pas 170° C, durées de séjour les plus courtes possibles. Toutefois, on peut avoir parfois intérêt, dans certains cas, à ce qu'une partie de la troisième étape de réticulation - décrite ci-après - ait lieu pendant la deuxième; ainsi, la réticulation ultérieure en sera d'autant écourtée.

C'est ainsi que, dans le cas du moulage par injection, il n'est pas indifférent d'opérer dans un moule froid ou dans un moule chaud, comme le montrent les exemples illustratifs donnés plus loin.

On a indiqué précédemment que, dans la variante consistant à utiliser un mélange-maître contenant le polyanhydride, les granulés de ce mélange-maître peuvent être notamment mélangés à sec avec les granulés ou de la poudre du polymère hydroxylé, le mélange final ainsi obtenu étant ensuite traité dans une extrudeuse.

L'extrudeuse est alors munie d'une filière à joncs, joncs qui, après solidification seront coupés en granulés - ces granulés serviront ultérieurement à alimenter divers types de machines de transformation, telles que presses à injection, extrudeuses à films, câbles, tubes... donnant des objets finis qui seront réticulés à l'état solide par traitement thermique.

Dans le cas de produits fabriqués par extrusion, on peut, si on le désire, les obtenir directement à partir de l'extrudeuse assurant le mélange "polymère hydroxylé-mélange-maître" en munissant cette extrudeuse non pas d'une filière à joncs mais de la filière convenable pour l'obtention directe de l'objet fini - ceci est possible parce que, grâce au mélange-maître, l'anhydride est déjà bien dispersé.

Comme le montreront les exemples chiffrés qui suivent, l'amélioration apportée par la technique, faisant l'objet de la variante selon la présente invention, est facilement mise en évidence par le fait que lorsque l'anhydride a été introduit par mélange-maître, la durée de traitement thermique nécessaire pour obtenir un certain degré de réticulation, caractérisé par le taux de gel, est beaucoup plus courte que lorsqu'il est introduit directement.

Dans une troisième étape, on achève la deuxième réaction de rèticulation (par formation d'un dihémiester)

sur les objets finis solides, obtenus dans la deuxième.

L'homme de métier sait que la réticulation de ces objets leur confère de nombreuses propriétés intéressantes: une meilleure tenue en température et au vieillissement, une meilleure résistance au fendillement sous-tension, de meilleures propriétés électriques.

Cette étape de post-réticulation s'effectue lentement dans le temps mais d'autant plus rapidement que la température au cours des première et deuxième étapes aura été élevée, le malaxage intense, les taux de groupes réactifs antagonistes élevés et la stoéchiométrie proche de 1.

On accomplit cette étape de réticulation par traitement thermique de l'objet. En général, une température de 50 à 100°C assurera la réticulation sans provoquer d'oxydation intempestive. On peut mettre l'objet dans une étuve, un four ou autre dispositif conçu pour le traitement thermique. La durée dépendra du degré de réticulation que l'on désire voir atteint (là encore on utilisera la détermination du taux de gel), de la taille de l'objet, notamment. Dans le cas de revêtement de fil métallique en continu par câblage, le fil revêtu sortant de l'extrudeuse peut, après refroidissement provoquant la solidification, être réticulé en continu en passant à travers un four chauffé aux infra-rouges avant enroulement définitif.

Le refroidissement provoquant la solidification doit alors se faire à l'air et non par passage dans l'eau, ce qui transformerait les groupes anhydrides en groupes acides moins réactifs.

Les exemples ci-dessous illustrent l'invention d'une manière plus détaillée.

Dans les exemples, on a notamment utilisé les matériels et méthodes suivantes:

- Plastographe BRABENDER PL 35 (malaxeur) avec chambre de malaxage de 25 $cm^3$. Chauffage par bain d'huile thermostaté.
- Plastographe BRABENDER PLV 151 (extrudeuse) avec monovis 20 D dont le taux de compression est de 3. 3 zones de chauffage avec régulation.

Refroidissement par eau de la trémie d'alimentation.

- Mesures de taux de gel;

Les extractions sont effectuées avec des montages type "Kumagawa".

Le solvant utilisé est le benzène.

On pèse un poids P1 de polymère granulé compris entre 4 et 6 grammes que l'on introduit dans une cartouche en papier, laquelle est placée dans la nacelle suspendue au-dessus d'un ballon contenant 300 ml de benzène. On règle le chauffage de façon à avoir un reflux régulier pendant une période de 24 heures. Après cette opération d'extraction, le résidu et la cartouche sont séchés sous vide à 60°C pendant 4 heures, et pesés; on obtient un poids P2 de résidu sec.

Le taux de gel est calculé par la formule:

$\frac{P2}{P1} \times 100$

Les exemples 1 et 2 ont pour but d'illustrer l'influence des conditions réactionnelles sur les résultats obtenus lors de la mise en réaction d'un polymère porteur de fonctions hydroxyles et d'un composé polyanhydride.

**Exemple 1**:

Dans un malaxeur Brabender, dont la vitesse de rotation des vis est de 50 t/min, on introduit une charge constituée par un mélange de 20 g de copolymère éthylène hydroxyéthylacrylate (EHEA) à 1,7 % en poids d'acrylate (indice de fusion 270) et 0,35 g de dianhydride pyromellitique (APM), comportant 2 moles d'$H_2O$ par mole de dianhydride, soit une stoéchiométrie $\frac{\text{anhydride}}{\text{OH}}$ de 0,95.

La mesure, à des durées de traitement déterminées, du couple du mélange et du couple du copolymère de base permet d'estimer l'évolution du système. Sur le tableau I ci-après, on a reporté les différences entre les couples enregistrés du mélange EHEA-APM et du copolymère EHEA seul.

**Tableau I**

| Température (0°C | Durée de traitement (minutes) | Différence entre le couple du mélange EHEA-APM et le couple De l'EHEA seul (g/m) |
|---|---|---|
| 120 | 5 | 4 |
| | 10 | 6 |
| | 30 | 15 |
| | 60 | 35 |
| 140 | 5 | 6 |
| | 10 | 15 |
| | 30 | 56 |
| | 60 | 180 |
| 150 | 5 | 8 |
| | 10 | 20 |
| | 30 | 150 |
| | 60 | 320 |
| 160 | 5 | 15 |
| | 10 | 35 |
| | 30 | 150 |
| | 60 | 380 |
| 170 | 5 | 20 |
| | 10 | 45 |
| | 30 | 210 |
| | 60 | 410 |

On constrate que le couple devient très important à partir de 170°C pour des durées de malaxage supérieures à 10 minutes. A des températures inférieures, pour des durées de malaxage inférieures à 10 minutes, l'évolution du couple est peu importante, ce qui montre que les phénomènes de réticulation sont très limités. Ceci permet, étant donné que les temps de séjour en extrudeuse et en presse à injecter sont très courts, d'effectuer une transformation du produit sans réticulation intempestive.

**Exemple 2**

On utilise 100 parties d'un copolymère éthylène-vinylacétate (EVA) à 45 % de vinylacétate (VA), hydrolysé à 99,5 % soit 0,515 OH/100 g et on étudie sur extrudeuse BRABENDER les produits obtenus en mélange avec des proportions variables de dianhydride pyromellitique (1 à 10 parties soit une stoechiométrie $\frac{\text{anhydride}}{\text{OH}}$ de 0,016 à 0,16).

Le tableau II résume les résultats obtenus sur les produits sortis de l'extrudeuse. On constate l'importance de la stoechiométrie.

Les produits sont ensuite laissés à l'étuve à 80°C pendant 24 h. On compare les taux de gel avant et après traitement.

**Tableau II**

| n° d'essai | T°C fourneaux extrudeuse | % anhydride | Anhydride/OH | Temps de passage dans l'extrudeuse en secondes | Aspect du jonc | T. gel sortie extrudeuse % | T. gel après traitment % |
|---|---|---|---|---|---|---|---|
| 1 | 150 | 10 | 0,16 | 30 | Poudre infusible | 85 | 95 |
| 2 | 150 | 2 | 0,032 | 30 | jonc lisse | 30 | 92 |
| 3 | 150 | 5 | 0,08 | 30 | poudre infusible | 80 | 96 |
| 4 | 150 | 2,5 | 0,04 | 30 | jonc rugueux | 35 | 94 |
| 5 | 150 | 2,5 | 0,04 | 60 | rupture d'extrudat | 50 | 94 |
| 6 | 170 | 5 | 0,08 | 30 | poudre | 85 | 95 |
| 7 | 170 | 2,5 | 0,04 | 30 | jonc légèrement rugueux | 40 | 91 |
| 8 | 170 | 2 | 0,032 | 30 | jonc lisse | 30-40 | 94 |
| 9 | 170 | 1 | 0,016 | 60 | jonc lisse | 30 | 94 |
| 10 | 170 | 2 | 0,032 | 60 | jonc rugueux | 45 | 95 |

**Exemple 3**

On utilise un copolymère éthylène-acrylate d'hydroxyéthyle (EHEA) dont la teneur en acrylate d'hydroxyéthyle est de 6 % soit 0,0513 OH/100 g et l'indice de fusion de 1,3 g/10 mn à 190°C. Son point de fusion est de 106°C.

On mélange au tonneau 100 parties de poudre de ce copolymère avec 5 parties d'anhydride pyroméllitique (APM) technique comportant 2 moles d'eau par mole d'anhydride (0,04 groupes anhydrides); la stoechiométrie est ainsi de:

$$\frac{anhydride}{OH} = 0,77$$

On extrude le mélange à 130°C dans une extrudeuse Kaufman super 2/50 avec un temps de séjour ne dépassant pas 2 minutes et granule le produit obtenu.

On introduit les granulés obtenus dans une presse à injecter BILLION H 80/50 et on fabrique des éprouvettes. Le moule est gardé à température ambiante. On fait ensuite évoluer les éprouvettes à 80°C pendant des durées variables et on mesure les caractéristiques mécaniques des produits différemment post-traités ainsi que celles du témoin dans les mêmes conditions (EHEA sans APM ayant subi les mêmes traitements).

Les résultats obtenus sont notés dans le tableau III.

On constate une évolution constante du module d'élasticité en flexion et de la température VICAT en fonction de la durée de post-traitement. Dans une variante, le moule a été maintenu à 80°C; on constate alors que les évolutions sont plus marquées que pour les éprouvettes injectées dans un moule froid.

**Tableau III**

ESSAIS DE FLEXION

| Durée de post-traitement à 80°C | EHEA de base (moule froid) | EHEA + APM (moule froid) | EHEA + APM moule à 80°C |
|---|---|---|---|
| | | Module d'élasticité en $kgF/mm^2$ | |
| 0 | 12,8 ± 0,9 | 14,4 ± 0,8 | 14,5 ± 0,8 |
| 1 heure | 15,3 ± 0,4 | 16,0 ± 0,7 | 19,3 ± 1 |
| 2 heures | 15,4 | 18,9 ± 3,2 | 19,1 ± 1 |
| 7 heures | 15,5 ± 1,4 | 19,5 ± 0,8 | 20,8 ± 1 |
| 18 heures | 15,6 | 23,4 ± 0,8 | 23,4 ± 0,8 |
| | | Température VICAT en °C | |
| 0 | 90 | 90 | |
| 1 heure | 90 | 90,5 | |
| 2 heures | 90 | 91 | |
| 7 heures | 90 | 91 | |
| 12 heures | 90 | 93 | |
| 18 heures | 90 | 93,5 | |

**Exemple 4**

A partir des granulés obtenus dans l'exemple 3, on extrude du tube à 130°C et 150°C sur extrudeuse ANDOUART 40-80 et on effectue différents post-traitements thermiques.

Des mesures de contraintes instantanées à l'éclatement sont effectuées sur les différents produits et le témoin.

On constate une évolution de la contrainte instantanée à l'éclatement, (voir tableau IV).

**Tableau IV**

| REFERENCES | PRESSION D'ECLATEMENT A 20°C EN BARS | CONTRAINTE D'ECLATEMENT A 20°C en H.BARS |
|---|---|---|
| Lacqténe 1002 FN 22 (polyéthylène témoin) | 37 | 1,11 |
| EHEA Base | 34 | 1,03 |
| EHEA + APM | 34 | 1,13 |
| EHEA + APM après 24 h à 80°C | 40 | 1,18 |
| EHEA + APM après 48 h à 80°C | 45 | 1,30 |
| EHEA + APM après 111 h à 80°C | 42 | 1,37 |

La pression d'essai est calculée par la formule

$p = \frac{26 \times Ep_{mini}}{\varnothing ext_{moyen} - Ep_{mini}}$ où

. P en bars

. σ contrainte appliquée en bars

. Ep: épaisseur minimale

. Ø Ext moyen: diamètre extérieur moyen $\frac{(\varnothing ext + \varnothing int)}{2}$

* Le "Lacqtène 1002 EN 22" témoin est un polyéthylène haute pression basse densité fabriqué par la Société ATO CHIMIE.

Il a un indice de fusion compris entre 0,15 et 0,25 et sa densité est de 0,922. Les valeurs de sa contrainte à l'éclatement instantané servent d'élément de comparaison.

**Exemple 5**

On introduit dans une étuve à 130°C deux tubes:

- l'un (a) témoin de copolymère éthylène-hydroxyéthyl acrylate
- l'autre (b) d'un mélange du copolymère éthylène-hydroxyéthyl acrylate et d'anhydride pyromellitique (fabriqué dans l'exemple 4),

tous deux ayant été traités 48 h à 80°C dans une étuve.

On constate après quelques heures de traitement à 130°C:

- que le tube (a) est totalement fondu
- que le tube (b) n'a pas été modifié, ce qui montre l'efficacité de la réticulation apportée par l'anhydride pyromellitique.

**Exemple 6**

On utilise un EVA copolymère éthylène-acétate de vinyle à 45 % de VA totalement hydrolysé et on effectue des mélanges à proportions variables avec de l'anhydride pyromellitique.

Les mélanges sont moulées par compression et des éprouvettes découpées à l'emporte pièce et laissées évoluer à 80°C pendant 24 heures. On observe sur le tableau V ci-dessous que la contrainte à la rupture augmente alors que l'allongement diminue, preuve de réticulation.

**Tableau V**

| % APM | Stoechio-métrie | Contraine (daN) | Allongement % |
|---|---|---|---|
| 0,5 | 1/8 | 125 | 60 |
| 2,5 | 1/4 | 150 | 40 |
| 5 | 1/2 | 150 | 30 |
| 7,5 | 3/4 | 165 | 20 |
| 10 | 1/1 | 175 | 15 |

**Exemple 7**

Avec le même EVA que dans l'exemple 6, on effectue un mélange avec un polyester dianhydride (vendu par la Société CHLOE Chimie, sous l'appellation REA 2290) comportant 0,21 anhydride/100 dans les proportions stoechiométriques 1/10. Des plaques sont obtenues par compression du produit résultant du mélange, ce qui permet d'y découper des éprouvettes pour essais de traction. On laisse évoluer les éprouvettes à la température de 80°C. La variation de l'allongement à la rupture montre bien l'évolution de la réticulation.

| | | |
|---|---|---|
| EVA + REA 2290 | témoin | 68 % |
| EVA + REA 2290 | 24 h à 80°C | 45 % |
| EVA + REA 2290 | 48 h à 80°C | 28 % |

**Exemple 8**

Un mélange-maître d'EVA et d'anhydride pyromellitique (APM) est tout d'abord préparé par passage à 100°C dans une extrudeuse WERNER et PFLEIDERER d'un mélange constitué de:

- 25 parties en poids de copolymère éthylène-acétate de vinyle, d'indice de fusion égal à 400
- 75 parties en poids d'anhydride pyromellitique.

A la sortie de l'extrudeuse WERNER et PFLEIDERER on recueille des joncs qui, après refroidissement, donnent des granulés.

Pour mettre en évidence l'influence du mélange-maître, on procède aux essais suivants:

- on extrude sur KAUFMAN super 2-50, à une température - matière de 130°C (durée de sèjour dans la vis: 1,5 minute), deux mélanges différents:

- l'un constitué de 100 parties en poids de granulés de copolymère éthylène hydroxyéthylacrylate (EHEA) à 6,75 % d'hydroxyéthylacrylate et un indice de fusion de 3,5 g/10 mn à 190°C et 6,35 parties d'anhydride pyromellitique (APM)

- et l'autre de 100 parties de granulés du même copolymère EHEA et 8,47 parties du mélange-maître obtenu comme décrit ci-dessus.

Les granulés résultant de ces deux extrusions ont la même teneur en APM: 6,35 % avec la même stoechiométrie anhydride/OH = 1.

Ils servent à mouler des éprouvettes au moyen d'une presse à injection dont la température de plastification de la matière est de 150°C ou de 160°C et dont le moule est maintenu à la température ordinaire.

Des taux de gels sont déterminés sur ces éprouvettes avant et après traitement thermique.

Les résultats obtenus sont consignés dans le tableau VI

**Tableau VI**

| Composition de l'éprouvette et température au moulage | Taux de gels sur éprouvettes en % non traitées | traitées à 100°C pendant 12 h | pendant 24 h | pendant 48 h |
|---|---|---|---|---|
| EHEA + APM (150°C) | 25 | 56 | 60 | 65 |
| EHEA + mélange - maitre EVA-APM (150°C) | 37 | 84 | 93 | 95 |
| EHEA + mélange-maitre EVA-APM (169°C) | 42 | 85 | 93 | 95 |

Les résultats ci-dessus montrent bien l'influence bénéfique de l'introduction d'APM sous forme de mélange-maître sur l'accélération de la réticulation.

Cette influence est également mise en évidence par le tableau VII ci-dessous qui regroupe les résultats d'essais de fluage pratiqués sur des éprouvettes témoin moulées à partir de granulés de: copolymère éthylène-acétate de vinyle (le même que celui décrit ci-dessus) sans aucune addition après passage en extrudeuse KAUFMAN à 130°C et injection avec température de plastification de 150°C et les éprouvettes "150°C" du tableau VI, toutes ces éprouvettes ayant été soumises à un traitement de 24 h à 100°C.

Ces essais de fluage ont été pratiqués suivant la norme NE C 32-020 art. 14 consistant à mesurer l'allongement à 150°C sous 4 bars.

**Tableau VII**

| | Résultats |
|---|---|
| Eprouvettes en EHEA pur | l'éprouvette casse |
| Eprouvettes en EHEA + APM | l'éprouvette casse |
| prouvettes en EHEA + mélange EVA/APM | allongement de 10 % |

On constate que, dans le deuxième cas, la réticulation a été pratiquement insuffisante puisqu'il y a eu casse, ce qui n'était pas le cas avec le mélange-maître.

Les résultats de l'exemple 8 mettent en évidence l'effet avantageux procuré par le mélange-maître.

**Exemple 9**

Dans cet exemple, on a utilisé une composition identique à celle de l'exemple 8, à ceci près qu'on y a introduit complémentairement des produits faisant fonction d'accélérateur.

- une huile silicone, mise sur le marché sous la dénomination Rhodorsil 710 par la Société Rh*one-Poulenc, contenant des groupements siloxanes qui, en plus, jouent le r*ole de plastifiant,
- le dilaurate de dibutyl-étain.

A l'aide des accélérateurs ci-dessus, on a préparé deux compositions en mélangeant les ingrédients ci-après dans les proportions pondérales indiquées:

EHEA-EVA-APM silicone 100-2,12-6,35-1

EHEA-EVA-APM silicone sel d'étain 100-2,12-6,35-1-0,54.

On a travaillé ensuite dans les mêmes conditions que dans l'exemple 8 et mesuré de la même manière les taux de gel sur éprouvettes. Les résultats obtenus sont consignés dans le tableau VIII qui est établi comme le tableau VI de l'exemple 8.

**Tableau VIII**

| Composition de l'éprouvette (et température au moulage) | non traitées | Taux de gels en % sur éprouvettes traites a 100°C | | |
|---|---|---|---|---|
| | | 12h | 24h | 48h |
| EHEA + mélange-maître (EVA-APM)(160°C) | 42 | 85 | 93 | 95 |
| EHEA + mélange-maître (EVA-APM silicone) (160°C) | 57,5 | 90 | 95 | 97 |
| EHEA + mélange-maître (EVA-APM-silicone-sel d'etain) (160°C) | 66 | 92 | 95 | 97 |

L'invention n'est pas limitée par les modes de réalisation préférés qui en ont été décrits précédemment. Des variantes et équivalents peuvent être apportés par l'homme du métier sans pour autant sortir du cadre de l'invention. Celle-ci permet d'obtenir des compositions réticulables solides par malaxage à l'état fondu de polymères oléfiniques porteurs de fonctions hydroxyles avec certains polyanhydrides choisis de manière déterminée, transformation des mélanges obtenus en objets finis par les techniques habituelles propres aux thermoplastiques et réticulation de ces objets par traitement à la chaleur à une température inférieure à leur point de fusion. La réticulation, qui est due à la réaction entre les groupes hydroxyliques portés par le polymère et les groupes carboxyliques appartenant aux polyanhydrides, conduit à des objets finis présentant des caractéristiques améliorées.

On notera également que la réticulation peut se réaliser par un traitement thermique traditionnel ou par micro-ondes.

La possibilité de réticuler par micro-ondes, est mise en évidence par l'expérience suivante: en partant d'un mélange THEA (100 parties)/APM (6,22 parties) traité en extrudeuse, on moule des éprouvettes pour essais de traction dont le taux de gel est égal à 27 %.

Après avoir soumis ces éprouvettes à un traitement pendant 15 secondes de micro-ondes continu soit de 20 watts, soit de 100 watts, on constate que dans les deux cas, le taux de gel, est passé à 50 %.

A noter que, pendant ce traitement, la température des éprouvettes n'a jamais dépassé 50°C.

**Revendications**

1. Composition thermoplastique réticulable par la chaleur, conduisant à un système non-thermoréversible, consistant en un mélange de:

(1) au moins un polymère oléfinique porteur de fonctions hydroxyles, qui contienne pour 100 g de polymère de 0,02 groupe OH à 1 groupe OH et dont l'indice de fusion selon la norme ASTM D1238 se situe entre 0,05 et 1000g/10 min à 190°C pour une charge de 2,16 kg

(2) au moins un composé polyanhydride qui soit partiellement ou totalement incompatible avec ledit polymère, lorsque ce dernier est à l'état fondu

(3) du produit résultant de la réaction partielle de (1), avec (2)

le rapport molaire entre anhydride et OH étant de 1 lorsque le polymère hydroxylé contient moins de 0,1 OH/100g tandis qu'il est inférieur à 1 lorsque le polymère comporte des quantités de groupes OH supérieures à 0,1 OH/100g, et ladite composition ayant un taux de gel, correspondant au taux d'insoluble dans le benzène, compris entre 2 et 50% et de préference entre 20 et 40 %.

2. Composition selon la revendication 1, caractérisée en ce que le polymère oléfinique hydroxylé porte de 0,025 OH à 0,1 OH par 100g.

3. Composition selon l'une des revendications 1 ou 2, caractérisée en ce que le polymère oléfinique hydroxylé est choisi dans le groupe constitué par les copolymères d'oléfines et d'un monomère insaturé hydroxylé de préférence un monomère vinylique hydroxylé et les polymères oléfiniques hydroxylés obtenus par greffage, hydrolyse ou dégradation d'un polymère oléfinique.

4. Compostion selon la revendication 3, caractérisée en ce que le polymère oléfinique hydroxylé est un copolymère éthylène-acrylate d'hydroxyéthyle ou bien un copolymère éthylène-acétate de vinyle totalement ou partiellement hydrolysé.

5. Composition selon l'une des revendications 1 à 4, caractérisée en ce que le polyanhydride est le dianhydride de l'acide pyromellitique, le dianhydride de l'acide benzophénone tétracarboxylique, ou un polyéther- ou polyesterdianhydride.

6. Composition selon l'une quelconque des revendications 1 à 5, caractérisée en ce qu'elle contient au moins un accélérateur, choisi en particulier parmi les silicones contenant des groupements siloxanes.

7. Composition selon l'une quelconque des revendications 1 à 5, caractérisée en ce qu'elle contient au moins un accélérateur choisi parmi les catalyseurs d'estérification tels que les sels organiques d'étain comme le dilaurate de dibutyl étain.

8. Procédé pour l'obtention de compositions réticulables par la chaleur, conduisant à des systèmes non-thermoréversibles, ces compositions étant telles que décrites aux revendications 1 à 7, caractérisé en ce qu'on mélange au moins un polymère oléfinique porteur de fonctions hydroxyles, tel que défini au point (1) de la revendication 1 et qui est à l'état fondu, avec au moins un composé polyanhydride, tel que défini au point (2) de la revendication 1, à une température légèrement supérieure à la température de fusion de la phase polymérique, jusqu'à ce que l'on atteigne un taux de gel, correspondant au taux d'insoluble dans le benzène, compris entre 2 et 50 %, et, de préférence, entre 20 et 40 %.

9. Procédé selon la revendication 8, caractérisé en ce que la température de mélange du polymère et du polyanhydride ne dépasse pas 170° C.

10. Procédé selon l'une des revendications 8 ou 9, caractérisé en ce qu'on introduit le composé polyanhydride dans le polymère oléfinique hydroxylé fondu au moyen d'un mélange-maître à base d'un polymère compatible avec le polymère hydroxylé, isolément ou en combinaison avec au moins un accélérateur.

11. Procédé selon la revendication 10, caractérisé en ce que les polymères utilisés dans ce mélange-maître, sont des copolymères éthylène-acétate de vinyle et plus particulièrement ceux dont la teneur en acétate de vinyle est comprise entre 28 et 33 % et dont l'indice de fluidité est voisin de 400 (exprimé en g/10 min. à 190° C), ou encore des terpolymères éthylène-acétate de vinyle-anhydride maléique.

12. Application des compositions réticulables par la chaleur décrites dans l'une quelconque des revendications 1 à 7 ou obtenues par un procédé décrit dans l'une des revendications 9 à 11, à la fabrication d'objets conformés réticulés, caractérisée en ce que, dans un premier stade, on transforme ces compositions en objets conformés réticulables, pas du tout ou partiellement réticulés, par des techniques habituelles de transformation des thermoplastiques et que, dans un deuxième stade, on réticule les objets conformés obtenus par la chaleur à une température inférieure à leur température de fusion.

13. Application selon la revendication 12, caractérisée en ce que la température, lors de la transformation des compositions en objets conformés ne dépasse pas 170° C.

14. Application selon l'une des revendications 12 ou 13, caractérisée en ce que la transformation consiste à mouler par injection les compositions réticulables dans un moule froid ou chaud, notamment dans un moule à une température voisine de 80° C.

15. Application selon l'une des revendications 12 à 14, caractérisée en ce qu'on réticule les objets conformés à une température comprise entre 80 et 100° C.

**Patentansprüche**

1. Durch Wärme vernetzbare thermoplastische Masse, die zu einem nichtthermoreversiblen System führt, bestehend aus einem Gemisch:

(1) wenigstens eines Hydroxylfunktionen tragenden olefinischen Polymers, das je 100 g Polymer 0,02 OH-Gruppe bis eine OH-Gruppe enthält und dessen Schmelzindex gemäß der ASTM-Norm D 1238 sich zwischen 0,05 und 1000 g/10 min bei 190° C für eine Beschickung von 2,16 kg befindet,

(2) wenigstens einer Polyanhydridverbindung, die teilweise oder insgesamt unverträglich mit dem genannten Polymer ist, wenn sich letzteres in geschmolzenem Zustand befindet, und

(3) von aus der Teilreaktion von (1) mit (2) resultierendem Produkt,

wobei das Molverhältnis von Anhydrid zu OH 1 ist, wenn das hydroxylierte Polymer weniger als 0,1 OH/100g enthält, wohingegen es kleiner als 1 ist, wenn das Polymer größere Menge an OH-Gruppen als 0,1 OH/l00 g aufweist, und wobei die Masse einen Gelprozentsatz entsprechend einem Prozentsatz an Unlöslichem in Benzol zwischen 2 und 50 % und vorzugsweise zwischen 20 und 40 % hat.

2. Masse nach Anspruch 1, dadurch gekennzeichnet, daß das hydroxylierte olefinische Polymer 0,025 OH bis 0,1 OH je 100 g trägt.

3. Masse nach einem der Ansprüche 1 oder 2, dadurch gekennzeichnet, daß das hydroxylierte olefinische Polymer aus der Gruppe ausgewählt ist, die aus den Copolymeren von Olefinen und eines ungesättigten hydroxylierten Monomers, vorzugsweise eines hydroxylierten Vinylmonomers, und den hydroxylierten olefinischen Polymeren, die man durch Aufpfropfen Hydrolyse oder Abbau eines olefinischen Polymers erhält, besteht.

4. Masse nach Anspruch 3, dadurch gekennzeichnet, daß das hydroxylierte olefinische Polymer ein Ethylen-Hydroxyethylacrylat-Copolymer oder auch ein Ethylen-Vinylacetat-Copolymer, das ganz oder teilweise hydrolysiert ist, ist.

5. Masse nach einem der Ansprüche 1 bis 4, dadurch gekennzeichnet, daß das Polyanhydrid das Dianhydrid von Pyromellitsäure, das Dianhydrid von Benzophenontetracarbonsäure oder ein Polyether- oder Polyesterdianhydrid ist.

6. Masse nach einem der Ansprüche 1 bis 5, dadurch gekennzeichnet, daß sie wenigstens einen Beschleuniger enthält, der insbesondere unter den Siloxangruppen enthaltenden Siliconen ausgewählt ist.

7. Masse nach einem der Ansprüche 1 bis 5, dadurch gekennzeichnet, daß sie wenigstens einen Beschleuniger enthält, der unter den Veresterungskatalysatoren, wie den organischen Zinnsalzen, wie Dibutylzinndilaurat, ausgewählt ist.

8. Verfahren zur Herstellung durch Wärme vernetzbarer Massen, die zu nicht-thermoreversiblen Systemen führen, wobei diese Massen so wie in den Ansprüchen 1 bis 7 beschrieben sind, dadurch gekennzeichnet, daß man wenigstens ein Hydroxylfunktionen tragendes olefinisches Polymer, wie es unter Punkt 1 des Anspruches 1 definiert ist und das sich im geschmolzenen Zustand befindet, mit wenigstens einer Polyanhydridverbindung, wie sie unter Punkt 2 des Anspruches 1 definiert ist, bei einer Temperatur etwas oberhalb der Schmelztemperatur der Polymerphase vermischt, bis man einen Gelprozentsatz entsprechend dem Prozentsatz an Unlöslichem in Benzol zwischen 2 und 50 % und vorzugsweise zwischen 20 und 40 % erreicht.

9. Verfahren nach Anspruch 8, dadurch gekennzeichnet, daß die Temperatur des Gemisches von Polymer und Polyanhydrid 170° C nicht übersteigt.

10. Verfahren nach einem der Ansprüche 8 oder 9, dadurch gekennzeichnet, daß man die Polyanhydridverbindung in das geschmolzene hydroxylierte olefinische Polymer mit Hilfe eines Vorgemisches auf der Grundlage eines mit dem hydroxylierten Polymer verträglichen Polymers, isoliert oder in Kombination mit wenigstens einem Beschleuniger, einführt.

11. Verfahren nach Anspruch 10, dadurch gekennzeichnet, daß die in dem Vorgemisch verwendeten Polymere Ethylen-Vinylacetat-Copolymere und stärker bevorzugt solche, deren Vinylacetatgehalt zwischen 28 und 33 % liegt und deren Fließindex nahe 400 (ausgedrückt als g/10 min bei 190° C) ist, oder ferner Ethylen-Vinylacetat-Maleinsäureanhydrid-Terpolymere sind.

12. Verwendung von durch Wärme vernetzbaren Massen, die in einem der Ansprüche 1 bis 7 beschrieben sind oder nach einem Verfahren erhalten werden, das in einem der Ansprüche 9 bis 11 beschrieben ist, zur Herstellung vernetzter Formlinge, dadurch gekennzeichnet, daß man in einer ersten Stufe diese Massen in vernetzbare, überhaupt nicht oder teilweise vernetzte Formlinge mit üblichen Methoden zur Formung von Thermoplasten überführt und daß man in einer zweiten Stufe die erhaltenen Formlinge durch Wärme bei einer Temperatur unterhalb der Schmelztemperatur vernetzt.

13. Verwendung nach Anspruch 12, dadurch gekennzeichnet, daß die Temperatur während der Formung der Massen zu Formlingen 170° C nicht übersteigt.

14. Verwendung nach einem der Ansprüche 12 oder 13, dadurch gekannzeichnet, daß die Formung in einer Formgebung durch Einspritzen der vernetzbaren Massen in eine kalte oder warme Form, besonders in eine Form bei einer Temperatur nahe 80° C, besteht.

15. Verwendung nach einem der Ansprüche 12 bis 14, dadurch gekennzeichnet, daß man die Formlinge bei einer Temperatur zwischen 80 und 100 ° C vernetzt.

**Claims**

1. Thermoplastic composition which can be crosslinked by heat, which leads to a system which is not heat reversible, which consists of a mixture of:

(1) at least one olefinic polymer carrying hydroxyl groups, which contains from 0.02 OH group to 1 OH group per 100 g of polymer and of which the melt index according to the ASTM standard D1238 lies between 0.05 and 1,000 g/10 min at 190° C for a load of 2.16 kg;

(2) at least one polyanhydride compound which is partially or totally incompatible with the said polymer when the latter is in a molten state and

(3) product resulting from the partial reaction of (1) with (2)

the molar ratio between the anhydride and the OH being 1 when the hydroxylated polymer contains less than 0.1 OH/100 g whereas it is less than 1 when the polymer contains quantities of OH groups greater than 0.1 OH/100 g, and the said composition having a gel content, corresponding to the content of benzene-insolubles, of between 2 and 50% and preferably between 20 and 40%.

2. Composition according to Claim 1, characterized in that the hydroxylated olefinic polymer carries from 0.025 OH to 0.1 OH per 100 g.

3. Composition according to either of Claims 1 and 2, characterized in that the hydroxylated olefinic polymer is chosen from the group consisting of copolymers of olefins and a hydroxylated unsaturated monomer, preferably a hydroxylated vinyl monomer, and hydroxylated olefinic polymers obtained by grafting, hydrolysis or degradation of an olefinic polymer.

4. Composition according to Claim 3, characterized in that the hydroxylated olefinic polymer is an ethylene/hydroxyethyl acrylate copolymer or an ethylene/vinyl acetate copolymer, which is totally or partially hydrolyzed.

5. Composition according to one of Claims 1 to 4, characterized in that the polyanhydride is pyromellitic acid dianhydride, benzophenonetetracarboxylic acid dianhydride or a polyether- or polyesterdianhydride.

6. Composition according to any one of Claims 1 to 5, characterized in that it contains at least one accelerator chosen in particular from amongst silicones containing siloxane groups.

7. Composition according to any one of Claims 1 to 5, characterized in that it contains at least one accelerator chosen from amongst esterification catalysts such as organic salts of tin such as dibutyltin dilaurate.

8. Process for the production of compositions which can be crosslinked by heat, which lead to systems which are not heat reversible, these compositions being as described in Claims 1 to 7, characterized in that at least one olefinic polymer carrying hydroxyl groups, as defined in point (1) of Claim 1 and which is in a molten state, is mixed with at least one polyanhydride compound as defined in point (2) of Claim 1, at a temperature slightly above the melting point of the polymeric phase, until a gel content, corresponding to the content of benzeneinsolubles, of between 2 and 50 %, and preferably between 20 and 40 % is obtained.

9. Process according to Claim 8, characterized in that the mixing temperature of the polymer and polyanhydride does not exceed 170° C.

10. Process according to either of Claims 8 and 9, characterized in that the polyanhydride compound is introduced into the molten hydroxylated olefinic polymer using a masterbatch based on a polymer which is compatible with the hydroxylated polymer, alone or in combination with at least one accelerator.

11. Process according to Claim 10, characterized in that the polymers employed in this master batch are ethylene/vinyl acetate copolymers and more particularly those with a vinyl acetate content of between 28 and 33 % and with a melt index in the vicinity of 400 (expressed in g/10 min at 190° C), or ethylene/vinyl acetate/maleic anhydride terpolymers.

12. Application of compositions which can be crosslinked by heat, described in any one of Claims 1 to 7 or obtained by a process described in one of Claims 9 to 11, to the manufacture of crosslinked shaped articles, characterized in that, in a first stage, these compositions are converted into shaped articles which can be crosslinked, which are not at all crosslinked or are partially crosslinked, by conventional techniques for the conversion of thermoplastics and that, in a second stage, the shaped articles obtained are crosslinked by heat at a temperature below their melting point.

13. Application according to Claim 12, characterized in that the temperature during the conversion of the compositions into shaped articles does not exceed 170° C.

14. Application according to either of Claims 12 and 13, characterized in that the conversion consists in injection moulding the compositions which can be crosslinked in a cold or hot mould, especially in a mould at a temperature in the vicinity of 80° C.

15. Application according to one of Claims 12 to 14, characterized in that the shaped articles are crosslinked at a temperature of between 80 and 100° C.